# EUROPEAN PATENT APPLICATION

(11) **EP 4 033 785 A1**
(43) Date of publication of application: **27.07.2022**
(21) Application number: 20864673.7
(22) Date of filing: 17.09.2020
(51) Int. Cl.: H04W 4/02, H04L 29/08

(54) **BLUETOOTH BEACON CONFIGURATION METHOD, SIGNAL TRANSCEIVING APPARATUS, PERSONAL MOBILE TERMINAL AND READABLE STORAGE MEDIUM**

(30) Priority: 18.09.2019 CN 201910880017
(71) Applicant: Bosch Power Tools (China) Co., Ltd., Zhejiang 310052 (CN)
(72) Inventor: LING, Tong, Hangzhou, Zhejiang 310052 (CN); BAO, Lei, Hangzhou, Zhejiang 310052 (CN); CHEN, Chao, Hangzhou, Zhejiang 310052 (CN); JIN, Xizi, Hangzhou, Zhejiang 310052 (CN); TAN, Chee Khiang, Hangzhou, Zhejiang 310052 (CN)
(74) Representative: Bee, Joachim
(86) International application number: PCT/CN2020/115757
(87) International publication number: WO 2021/052390

(57) **Abstract**

The present application provides a method for configuring a Bluetooth beacon, a signal transceiving apparatus, a personal mobile terminal and a readable storage medium. The method for configuring a Bluetooth beacon comprises: S110: any one positioning Bluetooth beacon is picked out from multiple positioning Bluetooth beacons and arranged in any one of multiple preset installation regions, and a pairing mode of the positioning Bluetooth beacon is activated; S120: the positioning Bluetooth beacon to be paired is searched for and found by a personal mobile terminal, a general-purpose unique identification code of the positioning Bluetooth beacon to be paired is acquired by the personal mobile terminal, and pairing is completed; and S130: the positioning Bluetooth beacon acquires a configuration parameter from the paired personal mobile terminal, and adjusts automatically, wherein the configuration parameter comprises preset configuration information corresponding to the preset installation region acquired by the personal mobile terminal based on preset configuration information of an application scenario. In this configuration process, because all of the specific design work has been completed before entering the site, the requirements placed on the operator in terms of skill level can be relaxed, and the configuration of the positioning Bluetooth beacons can be completed under simple guidance, without the need for additional manual adjustment/testing. Thus, the configured positioning Bluetooth beacons also have essentially no problem of signal interference caused by excessively high power.

## Description

### Technical field

The present application relates to the field of Bluetooth positioning, in particular to a method for configuring a Bluetooth beacon, a signal transceiving apparatus, a personal mobile terminal and a readable storage medium.

### Background art

As a common means of scenario positioning, positioning Bluetooth beacons are already widely used in many situations, including construction sites. Before putting them into formal operation, it is first necessary to perform preliminary setup and subsequent installation and pairing of the various positioning Bluetooth beacons. First of all, a technical specialist should plan which positions to the install positioning Bluetooth beacons at, based on the application scenario, and mark the positioning Bluetooth beacon of each different installation position. He then needs to carry these positioning Bluetooth beacons to the corresponding application scenario, and begin the installation process. When installation is performed, the pairing mode of the positioning Bluetooth beacons should be activated, one beacon at a time, for pairing to be initiated, while it should also be ensured that each marked beacon is precisely the beacon corresponding to the designated region. When pairing is activated, he needs to amend configuration parameters of the positioning Bluetooth beacon, such as signal power, broadcast frequency, etc., and test the positioning Bluetooth beacon, in order to check whether it is matched to the dimensions of the current region. If 100 positioning Bluetooth beacons need to be configured for the application scenario, the operation process described above needs to be repeated 100 times, which is very time-consuming and laborious, and additional time also needs to be spent searching for the positioning Bluetooth beacons corresponding to the various positions. The process described above requires the operator to have a high level of professional skill, and thus has a high manpower cost. Broadcast signals between positioning Bluetooth beacons configured on-site might interfere with one another to a considerable degree, resulting in a poor user experience.

In addition, for some application scenarios, it might also be necessary to additionally set up positioning Bluetooth beacons for dangerous areas in order to perform marking. When configuring a positioning Bluetooth beacon of this type, it is necessary to first of all match it to the current scenario map plan via a mobile terminal. However, in actual applications, because dangerous areas might change at any time, the pairing process described above also needs to be constantly reset correspondingly; this will not only consume a large amount of time, but also poses a major challenge in terms of the operator keeping abreast of changes in the dangerous area.

### Summary of the invention

The present application is intended to provide a method for configuring a Bluetooth beacon, a signal transceiving apparatus, a personal mobile terminal and a readable storage medium, in order to achieve the rapid configuration of a Bluetooth beacon in an application scenario by a method with low operating requirements and a simplified procedure.

In order to achieve at least one object of the present application, according to one aspect of the present application, a method for configuring a Bluetooth beacon is provided, comprising: S110: any one positioning Bluetooth beacon is picked out from multiple positioning Bluetooth beacons and arranged in any one of multiple preset installation regions, and a pairing mode of the positioning Bluetooth beacon is activated; S120: the positioning Bluetooth beacon to be paired is searched for and found by a personal mobile terminal, a general-purpose unique identification code of the positioning Bluetooth beacon to be paired is acquired by the personal mobile terminal, and pairing is completed; and S130: the positioning Bluetooth beacon acquires a configuration parameter from the paired personal mobile terminal, and adjusts automatically, wherein the configuration parameter comprises preset configuration information corresponding to the preset installation region acquired by the personal mobile terminal based on preset configuration information of an application scenario.

In order to achieve at least one object of the present application, according to another aspect of the present application, a signal transceiving apparatus is further provided, and configured to perform the following: receive an alarm signal broadcast by an alarm Bluetooth beacon arranged in a dangerous area in an application scenario, receive a positioning signal broadcast by a positioning Bluetooth beacon closest to the alarm Bluetooth beacon; and transmit the positioning signal and alarm signal to a cloud via a base station, and acquire a range of the dangerous area based on feedback information of the cloud.

In order to achieve at least one object of the present application, according to another aspect of the present application, a personal mobile terminal is further provided, and configured to perform the following: pair with a positioning Bluetooth beacon arranged in any one of multiple preset installation regions; and load, to the positioning Bluetooth beacon, preset configuration information corresponding to the preset installation region acquired on the basis of preset configuration information of an application scenario.

In order to achieve at least one object of the present application, according to another aspect of the present application, a readable storage medium is further provided, and configured to perform the following: pair with a positioning Bluetooth beacon arranged in any one of multiple preset installation regions; and load, to the positioning Bluetooth beacon, preset configuration information corresponding to the preset installation region acquired on the basis of preset configuration information of an application scenario.

According to the method for configuring a Bluetooth beacon, the signal transceiving apparatus, the personal mobile terminal and the readable storage medium of the present application, once the arrangement of the positioning Bluetooth beacon in the preset installation region has been completed on site in the application scenario, pairing is performed via the personal mobile terminal, and the preset configuration information corresponding to the preset installation region is loaded into the positioning Bluetooth beacon. The configuration of all of the positioning Bluetooth beacons can be completed by repeating the above actions. In this configuration process, because all of the specific design work has been completed before entering the site, the requirements placed on the operator in terms of skill level can be relaxed, and the configuration of the positioning Bluetooth beacons can be completed under simple guidance, without the need for additional manual adjustment/testing. Thus, the configured positioning Bluetooth beacons also have essentially no problem of signal interference caused by excessively high power.

### Brief description of the drawings

Fig. 1 is a schematic diagram of an embodiment of a method for configuring a Bluetooth beacon.
Fig. 2 is a schematic diagram of another embodiment of a method for configuring a Bluetooth beacon.
Fig. 3 is a schematic diagram of another embodiment of hardware for configuring a Bluetooth beacon.

### Detailed description of embodiments

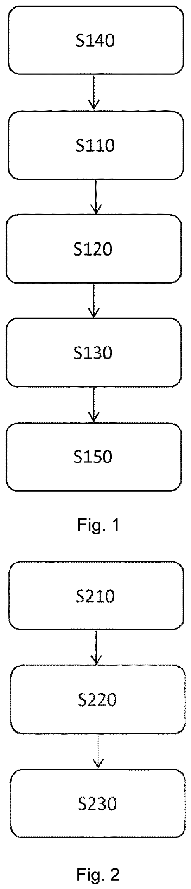

The present application now describes an embodiment of a method for configuring a Bluetooth beacon with reference to Fig. 1. Referring to the figure, the method at least comprises the following steps: first of all, because multiple positioning Bluetooth beacons 102 generally need to be arranged in the application scenario undergoing configuration in order to form a broadcast signal positioning array, it is generally necessary to carry multiple positioning Bluetooth beacons 102 to the site for arrangement. When the method in this embodiment is used, S110 will be performed first: at this time, the operator may pick out any one positioning Bluetooth beacon 102 from multiple positioning Bluetooth beacons 102, and arrange it in any one of multiple preset installation regions. This arrangement process may be completed by the operator himself, but may also be completed by the operator under the guidance of a dedicated GPS tool or GPS on a personal mobile terminal. The former method requires the operator to be very familiar with the application scenario and preset information, but can be used in various scenarios in which the network signal struggles to support GPS. The latter method is smarter and more convenient, but has higher requirements in terms of how unobstructed the network in the application scenario is. Once the positioning Bluetooth beacon 102 has been arranged in a particular preset installation region, the pairing mode of the positioning Bluetooth beacon 102 can be activated. Because the parameter information that needs to be configured for any positioning Bluetooth beacon 102 can be loaded automatically via a personal mobile terminal on site, there is no need to form a one-to-one correspondence between the positioning Bluetooth beacon 102 and the preset installation region in advance. Thus, in the configuration process, the step of searching for the Bluetooth beacon corresponding to each position one by one can be omitted; this increases efficiency considerably, and lowers the requirements placed on the operator in terms of professional skill level.

S120 can then be performed: the operator can operate a corresponding APP in the personal mobile terminal, so that it searches for the positioning Bluetooth beacon 102 to be paired, and after finding the target object, acquires a general-purpose unique identification code of the positioning Bluetooth beacon 102 to be paired in order to complete the accurate pairing of the two. At this point, the process of capturing and connecting the positioning Bluetooth beacon 102 to be currently configured has been realized; a response step will then be performed to complete the loading of a parameter configuration thereof.

Specifically, S130 is performed: causing the positioning Bluetooth beacon 102 to acquire configuration parameters from the paired personal mobile terminal, and automatically adjust itself according to the configuration parameters, so that the two are matched. The configuration parameters include preset configuration information corresponding to each preset installation region acquired by the personal mobile terminal based on preset configuration information of the application scenario.

As an example, once the personal mobile terminal and the current positioning Bluetooth beacon 102 have completed pairing, the operator may select a virtual corresponding preset installation region on the APP of the personal mobile terminal; alternatively, in a scenario in which the network signal is unobstructed, the actual position of the current positioning Bluetooth beacon 102 may also be acquired by means of a GPS tool on the personal mobile terminal; the actual position of the positioning Bluetooth beacon 102 is then compared with multiple preset installation regions in the application scenario, in order to acquire the preset installation region corresponding to the actual position. Whichever method is used, once the preset installation region corresponding to the current positioning Bluetooth beacon 102 has been confirmed, configuration parameters of the positioning Bluetooth beacon 102 that were designed for the preset installation region in a design stage can be loaded into the positioning Bluetooth beacon 102, such that the latter adjusts automatically, thereby completing the process of configuring the specific positioning Bluetooth beacon 102.

According to the method for configuring a Bluetooth beacon of the present application, once the arrangement of the positioning Bluetooth beacon 102 in the preset installation region has been completed on site in the application scenario, pairing is performed via the personal mobile terminal, and the corresponding preset installation region is then acquired in the personal mobile terminal either automatically or manually. Furthermore, configuration parameters of the positioning Bluetooth beacon 102 that were designed for the preset installation region in the design stage are loaded into the positioning Bluetooth beacon 102, such that the latter adjusts automatically, thereby completing the process of configuring the specific positioning Bluetooth beacon 102. The configuration of all of the positioning Bluetooth beacons 102 can be completed by repeating the above actions. In this configuration process, because all of the specific design work has been completed before entering the site, the requirements placed on the operator in terms of skill level can be relaxed, and the configuration of the positioning Bluetooth beacons can be completed under simple guidance, without the need for additional manual adjustment/testing. Thus, the configured positioning Bluetooth beacons 102 also have essentially no problem of signal interference caused by excessively high power.

Here, further improvements can be made to this method from different angles, in order to achieve corresponding technical effects, as explained demonstratively below.

For example, in order to perform the configuration of Bluetooth beacons more effectively, map and arrangement information of the application scenario can be acquired in an initial phase, and a Bluetooth arrangement design scheme can be prepared for the application scenario. Specifically, preset configuration information of the application scenario may at least comprise: configuration information of multiple preset installation regions which the application scenario has, e.g. the application scenario comprises 100 preset installation regions, and specific arrangement points of the preset installation regions in the application scenario; and preset signal coverage areas of the positioning Bluetooth beacons 102 and/or preset output powers and preset output frequencies of the positioning Bluetooth beacons 102 in the preset installation regions.

A portion of these parameters may be acquired directly through preliminary design, and another portion may be acquired by calculation based on existing parameters. As one way of acquiring the abovementioned parameters, before step S110 the method further comprises S140: by setting a configuration quantity of positioning Bluetooth beacons 102 in a designated application scenario and their respectively corresponding preset installation regions, preset signal coverage areas of the positioning Bluetooth beacons 102 are acquired, and preset output powers and preset output frequencies of the positioning Bluetooth beacons 102 are calculated. More specifically, after acquiring the configuration quantity of positioning Bluetooth beacons 102 and their respectively corresponding preset installation regions, incircles of preset signal coverage areas corresponding to the positioning Bluetooth beacons 102 can be acquired based on the distance between any preset installation region and another preset installation region which is closest, and preset output powers and preset output frequencies of the positioning Bluetooth beacons 102 are calculated.

As another example, in order to achieve objectives such as reuse, updating or error checking of these configuration parameters, it is also possible to additionally configure a cloud 104, and upload these configuration parameters to the cloud 104 or download them from the cloud 104 by means of the personal mobile terminal. It should be known that the configuration method described above may be completed independently in the absence of a network signal such as 4G or WIFI. However, the process of exchanging data with the cloud 104 needs to be performed in the presence of a network signal such as 4G or WIFI.

In addition, taking into account the fact that, when the operator installs a Bluetooth beacon on site in the application scenario, there might be a certain degree of installation error with respect to a preset installation position, in order to prevent such an installation error from affecting the Bluetooth beacon's execution of the function of broadcasting signals, it is possible to first of all set a corresponding preset installation region for each preset installation position based on calculation, i.e. it is determined by calculation that an installation error of the Bluetooth beacon in this preset installation region will not affect its execution of a basic function excessively. With the arrangement described above, the problem of error affecting a single Bluetooth beacon is solved; however, all of the Bluetooth beacons might have a certain degree of installation error when installed, and the accumulation of such installation errors might exceed the calculated range that will not affect their basic function, hence, broadcast signals between adjacent Bluetooth beacons will have a region of excessive overlap and interference, or will have an excessive region not covered by signals. In order to solve the problem of such accumulation of installation errors of Bluetooth beacons, the method may further comprise S150: causing the positioning Bluetooth beacons to communicate with each other in order to acquire actual separation distances, and correcting preset configuration information of the positioning Bluetooth beacons based on the actual separation distances, so that they eliminate regions of excessive overlap and interference, and cover excessive regions not covered by signals.

Now referring to Fig. 2, the present application now goes on to describe another embodiment of a method for configuring a Bluetooth beacon with reference to the figure. The previous embodiment of the configuration method was mainly concerned with the positioning/configuration of Bluetooth beacons in the application scenario; this embodiment is mainly concerned with the marking of dangerous areas in the application scenario by means of Bluetooth beacons, in order to achieve a warning effect.

Specifically, the method may comprise the following steps: first of all, S210: acquiring a dangerous area of the application scenario in real time, and arranging an alarm Bluetooth beacon 101 in each dangerous area; at this time, it is only necessary for it to have the function of broadcasting Bluetooth signals, with no need for additional pairing to load information such as the position or power thereof. S220 is then performed: the alarm Bluetooth beacon 101 broadcasts an alarm signal, and the positioning Bluetooth beacon 102 closest to the alarm Bluetooth beacon 101 broadcasts a positioning signal; and S230 is performed: combining the alarm signal and the positioning signal to acquire the range of the dangerous area. The method has the advantage that in the stage of arranging the alarm Bluetooth beacon 101, there is no need to subject it to the process of pairing and loading configuration parameters, so a lot of time can be saved. Moreover, taking into account the real-time variability of dangerous areas, with regard to the stage of arranging the alarm Bluetooth beacon 101 with multiple changes, the method will save a large amount of time. Meanwhile, the range of the dangerous area can still be roughly determined by means of the position signal broadcast by the positioning Bluetooth beacon 102 closest to the alarm Bluetooth beacon 101, and when a worker carrying a signal transceiving apparatus 103 enters the dangerous area, a warning is given to urge him to leave. Although the precision of the position signal provided is reduced slightly compared with the case where the alarm Bluetooth beacon 101 is configured directly, the time cost that is saved will bring a greater benefit. In addition, the precision of the position signal will not weaken the warning effect in any way; a worker who arbitrarily approaches a dangerous area can still receive a warning immediately and leave.

In addition, taking into account the structure of the signal transceiving apparatus 103 itself and and the limited nature of the functions that it can perform, it is also possible for the function of analytic processing of signals to be transferred to the cloud 104. Thus, the cloud 104 may be additionally configured, and the alarm signals and positioning signals are uploaded via a base station to the cloud 104 by means of the signal transceiving apparatus 103; similarly, an analysis result is downloaded from the cloud 104 via the base station. In addition, the cloud 104 may also have functions such as storage or error checking of these signal data.

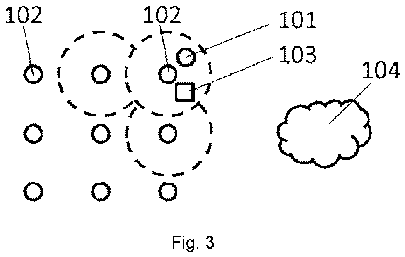

The operating process of applying the configuration method in the abovementioned embodiment in an application scenario is described below with reference to Fig. 3. First of all, the arrangement of an array of positioning Bluetooth beacons 102 in the application scenario has been completed in accordance with the method in the embodiment described above, and a corresponding alarm Bluetooth beacon 101 has been arranged at a currently discovered dangerous area. As shown in the figure, at the present time there is only one dangerous area in the application scenario, and this is closest to the positioning Bluetooth beacon 102 at the top right corner. During operation, each Bluetooth beacon broadcasts a Bluetooth beacon signal separately. However, when a worker carrying the signal transceiving apparatus 103 goes to the region at the top right, the signal transceiving apparatus 103 he is carrying will simultaneously receive an alarm signal and a positioning signal, because he has simultaneously entered the signal broadcast ranges of the positioning Bluetooth beacon 102 and the alarm Bluetooth beacon 101 at the top right corner. At this time, the worker can be warned by means of a buzzer, a vibration device or another alerting means, to urge him to leave this area; in addition, the signal transceiving apparatus 103 can also send the alarm signal and positioning signal to the cloud 104 via the base station, so that the cloud can perform functions such as analysis, storage or error checking, e.g. analyse the position of the dangerous area by analysing the positioning signal, etc. In addition, if dangerous areas in the application scenario change, requirements can be met by moving or adding alarm Bluetooth beacons 101, so operations are convenient and simple, and the alarm result is impressive.

In addition, in order to better complement the execution of the configuration methods in the above embodiments, it is further possible here to provide various hardware apparatuses having corresponding signal receiving, sending or processing functions, as explained demonstratively below.

For example, an embodiment of a signal transceiving apparatus 103 may be provided. The signal transceiving apparatus 103 is configured to perform the following: receive an alarm signal broadcast by an alarm Bluetooth beacon 101 arranged in a dangerous area in an application scenario, and receive a positioning signal broadcast by a positioning Bluetooth beacon 102 closest to the alarm Bluetooth beacon 101; and transmit the positioning signal and alarm signal to a cloud 104 via a base station, and acquire the range of the dangerous area based on feedback information of the cloud 104. The signal transceiving apparatus 103 may also be adaptively adjusted for different application scenarios. In an embodiment, when used on a construction site, it may be integrated in special-purpose equipment of a construction worker, e.g. integrated in a safety helmet, in order to transmit and receive various signals in real time, thereby making it easier to ascertain the working tendencies of various construction workers, and issue corresponding danger alerts.

As another example, an embodiment of a person mobile terminal may also be provided. The personal mobile terminal is configured to perform the following: pair with a positioning Bluetooth beacon 102 arranged in any one of multiple preset installation regions; match the actual position of the positioning Bluetooth beacon 102 with a preset installation region in the application scenario; and load, to the positioning Bluetooth beacon 102, preset configuration information corresponding to the preset installation region acquired on the basis of preset configuration information of the application scenario. At this time, when going to the application scenario to arrange Bluetooth beacons, a worker can simply use a personal mobile terminal such as a mobile phone or tablet computer carried on his person to complete the process of Bluetooth configuration easily.

As another example, an embodiment of a readable storage medium may also be provided. The readable storage medium is configured to perform the following: pair with a positioning Bluetooth beacon 102 arranged in any one of multiple preset installation regions; and load, to the positioning Bluetooth beacon 102, preset configuration information corresponding to the preset installation region acquired on the basis of preset configuration information of the application scenario. On this basis, by configuring the readable storage medium for various hardware apparatuses, it is possible to further expand the scope of a loading apparatus of the configuration method described above, so that it is not limited to the abovementioned personal mobile terminal alone.

The examples above mainly illustrate the method for configuring a Bluetooth beacon, the signal transceiving apparatus, the personal mobile terminal and the readable storage medium of the present application. Although only some embodiments of the present application have been described, those skilled in the art should understand that the present application can be implemented in many other forms without deviating from the substance and scope thereof. Therefore, the examples and embodiments shown are regarded as illustrative rather than restrictive. The present application may cover various modifications and substitutions without departing from the spirit and scope of the present application as defined by the attached claims.

## Claims

1. Method for configuring a Bluetooth beacon, **characterized by** comprising:
S110: any one positioning Bluetooth beacon is picked out from multiple positioning Bluetooth beacons and arranged in any one of multiple preset installation regions, and a pairing mode of the positioning Bluetooth beacon is activated;
S120: the positioning Bluetooth beacon to be paired is searched for and found by a personal mobile terminal, a general-purpose unique identification code of the positioning Bluetooth beacon to be paired is acquired by the personal mobile terminal, and pairing is completed; and
S130: the positioning Bluetooth beacon acquires a configuration parameter from the paired personal mobile terminal, and adjusts automatically, wherein the configuration parameter comprises preset configuration information corresponding to the preset installation region acquired by the personal mobile terminal based on preset configuration information of an application scenario.

2. Configuring method according to Claim 1, **characterized in that** the preset configuration information of the application scenario comprises: configuration information of multiple preset installation regions which the application scenario has; and a preset signal coverage area of the positioning Bluetooth beacon and/or a preset output power and a preset output frequency of the positioning Bluetooth beacon in each of the preset installation regions.

3. Configuring method according to Claim 1, **characterized in that**, before step S110, the method further comprises S140: by setting a configuration quantity of positioning Bluetooth beacons in the designated application scenario and their respectively corresponding preset installation regions, a preset signal coverage area of each of the positioning Bluetooth beacons is acquired, and a preset output power and a preset output frequency of the positioning Bluetooth beacon are calculated.

4. Configuring method according to Claim 1, **characterized in that**, after step S130, the method further comprises S150: the positioning Bluetooth beacons communicate with each other in order to acquire actual separation distances, and preset configuration information of each of the positioning Bluetooth beacons is corrected based on the actual separation distances.

5. Configuring method according to any one of Claims 1 - 4, **characterized by** further comprising: uploading or downloading the configuration parameter to or from a cloud via the personal mobile terminal.

6. Configuring method according to any one of Claims 1 - 4, **characterized by** further comprising:
S210: a dangerous area of the application scenario is acquired in real time, and an alarm Bluetooth beacon is arranged in each dangerous area;
S220: the alarm Bluetooth beacon broadcasts an alarm signal, and the positioning Bluetooth beacon closest to the alarm Bluetooth beacon broadcasts a positioning signal;
S230: the alarm signal and the positioning signal are combined to acquire a range of the dangerous area.

7. Configuring method according to Claim 6, **characterized by** further comprising: uploading the alarm signal and the positioning signal via a base station to a cloud by means a signal transceiving apparatus.

8. Signal transceiving apparatus, **characterized by** being configured to perform the following: receive an alarm signal broadcast by an alarm Bluetooth beacon arranged in a dangerous area in an application scenario, receive a positioning signal broadcast by a positioning Bluetooth beacon closest to the alarm Bluetooth beacon; and transmit the positioning signal and alarm signal to a cloud via a base station, and acquire a range of the dangerous area based on feedback information of the cloud.

9. Personal mobile terminal, **characterized by** being configured to perform the following: pair with a positioning Bluetooth beacon arranged in any one of multiple preset installation regions; and load, to the positioning Bluetooth beacon, preset configuration information corresponding to the preset installation region acquired on the basis of preset configuration information of an application scenario.

10. Readable storage medium, **characterized by** being configured to perform the following: pair with a positioning Bluetooth beacon arranged in any one of multiple preset installation regions; and load, to the positioning Bluetooth beacon, preset configuration information corresponding to the preset installation region acquired on the basis of preset configuration information of an application scenario.
